# EUROPÄISCHE PATENTSCHRIFT

(11) **EP 4 721 952 B1**
(45) Veröffentlichungstag und Bekanntmachung des Hinweises auf die Patenterteilung: **21.10.2026**
(21) Anmeldenummer: 25205304.6
(22) Anmeldetag: 29.09.2025
(51) Int. Cl.: B29C 51/26, B65G 57/00, B65G 57/02

(54) **ÜBERGABEVORRICHTUNG, ÜBERGABESTATION, THERMOFORMANLAGE UND VERFAHREN ZUM ÜBERGEBEN VON THERMOGEFORMTEN FORMTEILEN**
TRANSFER DEVICE, TRANSFER STATION, THERMOFORMING SYSTEM AND METHOD FOR TRANSFERRING THERMOFORMED MOULDED PARTS
DISPOSITIF DE TRANSFERT, STATION DE TRANSFERT, INSTALLATION DE THERMOFORMAGE ET PROCÉDÉ DE TRANSFERT DE PIÈCES MOULÉES THERMOFORMÉES

(30) Priorität: 02.10.2024 DE 102024128674
(43) Veröffentlichungstag der Anmeldung: 08.04.2026
(73) Patentinhaber: KIEFEL GmbH, 83395 Freilassing (DE)
(72) Erfinder: Datscher, Aaron, 4563 Micheldorf (AT); Sternecker, Gerald, 4592 Leonstein (AT); Staudinger, Michael, 83413 Fridolfing (DE)
(74) Vertreter: DTS Patent- und Rechtsanwälte PartmbB

(56) Entgegenhaltungen:
- EP-B1- 0 995 583
- DE-B4- 10 356 001

## Beschreibung

### Technisches Gebiet

Es werden eine Übergabevorrichtung zur Übergabe von parallel angeordneten Reihen gestapelter Formteile, eine Übergabestation mit einer Übergabevorrichtung, eine Thermoformanlage mit einer Übergabestation und ein Verfahren zum Übergeben von thermogeformten Formteilen mittels einer Übergabevorrichtung beschrieben.

### Hintergrund

Bei Thermoformanlagen mit einem kippbaren Werkzeug werden die geformten Formteile nach dem Umformen in der Regel in einem Stapelkorb aufgenommen. Der Stapelkorb weist eine Vielzahl an Aufnahmefächern auf, deren Zahl und Anordnung den Kavitäten eines Formwerkzeugs entsprechen. Die Formteile werden deshalb aus den Kavitäten gemäß deren Anordnung in die Aufnahmefächer gestapelt. Die Aufnahmefächer sind so ausgebildet, dass mehrere Formteile je Aufnahmefach aufgenommen werden können. Wenn eine bestimmte Anzahl an Formteilen je Aufnahmefach gestapelt ist, werden die Stapel über eine Verschiebeeinheit reihenweise aus den Aufnahmefächern auf Übergabeelemente geschoben.

Bei einem Wechsel eines Formwerkzeugs kann es erforderlich sein auch den Stapelkorb zu wechseln, wenn insbesondere Formteile mit veränderten Maßen und Abständen in den Kavitäten geformt werden. Dementsprechend ist es dann auch erforderlich die Übergabeelemente oder eine Übergabeeinheit auszutauschen, damit die Stapel aus dem Stapelkorb auf die zugeordneten Übergabeelemente (bspw. Schalen) geschoben werden können. Ein solcher zusätzlicher Wechsel ist jedoch mit einem erhöhten Aufwand und zusätzlichen Kosten verbunden.

Darüber hinaus ist es nachteilig, wenn ein Austausch von Übergabeelementen erfolgt, da häufig die Übergabeelemente die Stapel an weitere Einrichtungen zur Weiterverarbeitung übergeben. Unterschiedlich ausgebildete Übergabeelemente oder Übergabeelemente, deren Abstand zueinander sich ändern kann, erschweren eine Weiterverarbeitung und führen zu einem hohen konstruktiven und prozesstechnischen Aufwand. Um eine prozesssichere Weiterverarbeitung zu gewährleisten wäre es daher vorteilhaft, die Stapel an Formteilen in definierten Positionen weiter zu transportieren, unabhängig von den Formteildimensionen und den Abständen der Kavitäten eines Formwerkzeugs und den Aufnahmefächern eines Stapelkorbs.

Weiterer relevanter Stand der Technik ist in folgenden Dokumente offenbart:
EP 0 995 583 B1, DE 103 56 001 B4.

Die EP 0 995 583 B1 betrifft eine Thermoformmaschine mit nachgeschalteter automatischer Stapel- und Zählvorrichtung, bei der ausgeworfene Formteile mittels einer Fangplatte zu Artikelstangen zusammengeführt und bis zu einer vorgegebenen Stückzahl gestapelt werden. Nach Erreichen der Stückzahl werden die Artikelstangen in einen verfahrbaren Stapelkorb übergeben, der zwischen Übergabe- und Entladestation bewegt werden kann. Eine kammartige Abschiebereinheit schiebt die Artikelstangen anschließend reihen- bzw. lagenweise aus dem Stapelkorb auf einen Abförderer bzw. ein Transportband. Durch das schrittweise Absenken des Stapelkorbs und das Takten des Abförderers wird eine geordnete Übergabe und Ablage für die Weiterverarbeitung erreicht.

### Aufgabe

Es besteht daher eine Aufgabe darin, eine Lösung zum Weitertransport von gestapelten Formteilen bereitzustellen, die eine prozesssichere Weiterverarbeitung gewährleistet, wobei der Aufwand gering ist und die Lösung platzsparend ausgebildet ist. Eine weitere Aufgabe besteht darin, eine alternative Lösung zum Weitertransport anzugeben.

### Lösung

Zur Lösung des oben beschriebenen Problems wird eine Übergabevorrichtung mit den Merkmalen von Anspruch 1 angegeben sowie eine Thermoformanlage mit den Merkmalen von Anspruch 12, sowie ein Verfahren mit den Merkmalen von Anspruch 13. Weitere vorteilhafte Ausgestaltungen sidn in den abhängigen Ansprüchen definiert.

Die oberbegrifflichen Merkmale von Anspruch 1 sind aus der EP 0 995 583 B1 bekannt.

Die vorstehend genannte Aufgabe wird durch eine Übergabevorrichtung zur Übergabe von parallel angeordneten Reihen gestapelter Formteile gelöst, aufweisend mehrere Übergabeelemente, die parallel zueinander angeordnet und dazu ausgebildet sind, jeweils eine Reihe gestapelter Formteile während einer Übergabe zu halten, wobei der Abstand der Übergabeelemente während der Übergabe zwischen der Aufnahme von Reihen gestapelter Formteile und der Übergabe von Reihen gestapelter Formteile veränderbar ist.

Die Ausbildung der Übergabevorrichtung mit Übergabeelementen, deren Abstand während der Übergabe veränderbar ist, ermöglicht es, die Übergabeelemente so zueinander auszurichten, dass diese den idealen, angepassten Abstand für die Aufnahme von Stapeln an Formteilen aus den Aufnahmefächern eines Stapelkorbs aufweisen und zudem einen definierten Abstand zueinander für eine weitere Verarbeitung und Übergabe einnehmen können.

Damit wird eine prozesssichere Weiterverarbeitung gewährleistet, wobei die gestapelten Formteile immer in einer definierten Position weitertransportiert werden können.

Die Anzahl an Übergabeelementen entspricht mindestens der Anzahl an Aufnahmefächern in einer Reihe des Stapelkorbs. Die Übergabevorrichtung kann mehrere Übergabeelemente aufweisen als eine Reihe Aufnahmefächer aufweist, damit bei einer größeren Anzahl an Aufnahmefächern in einer Reihe eine entsprechende Anzahl an Übergabeelementen vorgesehen ist. Sind jedoch weniger Aufnahmefächer in einer Reihe vorgesehen kann ein Teil der Übergabeelemente frei bleiben bzw. nicht mit Stapeln bestückt werden. In weiteren Ausführungen können nicht benötige Übergabeelemente aus der Übergabevorrichtung entnommen werden. Hierzu können die Übergabeelemente mit Befestigungsmitteln verbunden sein, die einen schnellen und einfachen Austausch ermöglichen. Es können bspw. verrastbare Verbindungselemente (auch magnetisch) oder Steckverbindungen vorgesehen sein.

Die Übergabeelemente können als Schalen ausgebildet sein. Die Länge der Schalen kann nach Maßgabe der Stapelhöhe von verschiedenen Formteilen bestimmt und entsprechend ausgebildet sein.

Der Vorteil der Übergabevorrichtung besteht insbesondere darin, dass diese nicht ausgetauscht werden muss, wenn ein Werkzeugwechsel mit einem Wechsel des Kavitätenlayouts (Größe, Ausbildung, Position und Abstand der Kavitäten) erfolgt. Zudem ist es nicht erforderlich den Weitertransport zu verändern oder Maßnahmen vorzusehen, die sich auf unterschiedliche Abstände von Übergabeelementen mit darauf abgelegten Stapeln anpassen, so dass die Weiterverarbeitung wesentlich vereinfacht wird.

In weiteren Ausführungen kann der Abstand der Übergabeelemente gleichmäßig veränderbar sein, wobei die Abstände zu- bzw. abnehmen aber stets im Wesentlichen den gleichen Abstand zueinander aufweisen.

In weiteren Ausführungen kann der Abstand der Übergabeelemente zueinander variabel veränderbar sein. Dies bietet viele Möglichkeiten im Hinblick auf verschiedene Kavitätenlayouts. Bspw. können Kavitäten ungleichmäßig verteilt sein, so dass ein ungleichmäßiger Abstand von Übergabeelementen für die Übergabe von den Aufnahmefächern erforderlich ist. Darüber hinaus kann die Übergabevorrichtung auch Stapel von Formteilen aufnehmen und in definiertem Abstand an eine Transporteinheit weitergeben, wenn unterschiedlich ausgebildete Kavitäten in einem Formwerkzeug vorgesehen sind.

In weiteren Ausführungen kann eine Übergabevorrichtung eine Kulissenführung aufweisen, wobei die Übergabeelemente jeweils ein Führungselement (bspw. Zapfen oder dergleichen) aufweisen, das in einer korrespondierenden Führung der Kulissenführung aufgenommen ist, wobei die Kulissenführung verlagerbar ist, um durch die Verlagerung den Abstand der Übergabeelemente nach Maßgabe der Führungen anzupassen. Die Verlagerung der Kulissenführung ermöglicht die Verlagerung der Übergabeelemente, welche bspw. auf einem Schienensystem oder ähnlichem relativ zueinander verschiebbar gelagert sind.

In weiteren Ausführungen kann die Übergabevorrichtung eine Kulissenplatte aufweisen, welche die Kulissenführung aufweist und über mindestens einen Antrieb linear verlagerbar ist, oder eine Kulissenwalze, deren Oberfläche die Kulissenführung aufweist und welche über mindestens einen Antrieb rotierbar gelagert ist. Die Kulissenplatte oder die Kulissenwalze weisen die Führungen auf, in denen die Führungselemente der Übergabeelemente aufgenommen sind. Eine lineare Verlagerung der Kulissenplatte oder eine Rotation der Kulissenwalze führt zwangsläufig zu einer Verlagerung der Übergabeelemente, die nur in einer Richtung verschiebbar gelagert sein können. Bei einer Kulissenplatte ist der Verschiebeweg und die Länge der Führungen an den vorhandenen Platz in der Übergabevorrichtung nach Maßgabe der Länge der Übergabeelemente zu bestimmen. Eine Kulissenwalze weist den Vorteil auf, dass diese in nur einer Drehrichtung endlos angetrieben werden kann und nicht zwangsläufig zwischen Rechts- und Linkslauf umgeschaltet werden muss. Zudem weist eine Kulissenwalze den Vorteil auf, dass diese auch bei kurzen Übergabeelementen eine breite Verstellmöglichkeit der Übergabeelemente zueinander ermöglicht. Ein Vorteil bei einer Kulissenplatte gegenüber einer Kulissenwalze liegt in der flachen Ausführung, so dass der Bauraumbedarf erheblich reduziert ist. Sowohl Kulissenwalze als auch Kulissenplatte sind mit einem Antrieb verbunden, der nach Maßgabe von Steuersignalen (bspw. von einer Maschinensteuerung einer Thermoformanlage) eine Bewegung auslöst, um durch die Verlagerung der Kulissenplatte oder -walze die Übergabeelemente zu verschieben.

In weiteren Ausführungen können mindestens zwei Gruppen von Übergabeelementen separat verlagerbar sein und/oder einen separaten Antrieb aufweisen, so dass der Abstand der Übergabeelemente mindestens zweiter Gruppen von Übergabeelementen in der jeweiligen Gruppe und/oder der Gruppen zueinander individuell veränderbar ist. Diese Lösung bietet eine Möglichkeit der individuellen Anpassung der Abstände von Übergabeelementen.

In weiteren Ausführungen kann jedes Übergabeelement einen eigenen Antrieb aufweisen, so dass der Abstand der Übergabeelemente zueinander individuell einstellbar ist. Dies ermöglicht eine Anpassung der Übergabeelemente unabhängig voneinander und individuell an verschiedenste Kavitätenlayouts.

In weiteren Ausführungen können die Übergabeelemente als Schalen ausgebildet sein.

Die vorstehend genannte Aufgabe wird auch durch eine Übergabestation mit einem Stapelkorb zur Aufnahme thermogeformter Formteile aus einem Formwerkzeug, wobei der Stapelkorb mehrere Reihen an Aufnahmefächern für Formteile aufweist, in denen Formteile stapelweise aufnehmbar sind, eine Verschiebeeinheit, die dazu ausgebildet ist, gestapelte Formteile aus den Aufnahmefächern des Stapelkorbs reihenweise auszugeben, eine Übergabevorrichtung zur Übergabe von gestapelten Formteilen gemäß einer der vorstehend beschriebenen Ausführungen mit mehreren Übergabeelementen, die parallel zueinander angeordnet und dazu ausgebildet sind, jeweils eine Reihe gestapelter Formteile während einer Übergabe zu halten, und einer Transporteinheit, die parallel angeordnete Aufnahmen für gestapelte Formteile aufweist, gelöst, wobei der Abstand der Übergabeelemente zueinander veränderbar ist.

Die Übergabestation umfasst mehrere Komponenten einer Thermoformanlage und ermöglicht die reihenweise Aufnahme von gestapelten Formteilen in beliebigen Abstand und die Übergabe an die Aufnahmen einer Transporteinheit mit einem stets gleichbleibenden Abstand.

In weiteren Ausführungen kann der Abstand der Aufnahmefächer mindestens einer Reihe des Stapelkorbs unterschiedlich groß gegenüber dem Abstand der Aufnahmen der Transporteinheit sein.

In weiteren Ausführungen kann die Übergabevorrichtung relativ zum Stapelkorb verfahrbar sein. Die Übergabevorrichtung kann Bestandteil eines Hubsystems sein, das relativ zu einem Stapelkorb verlagerbar ist, um die Stapel aus den Aufnahmefächern reihenweise aufzunehmen. Zudem kann die Hubeinheit verschwenkbar sein, damit die Übergabevorrichtung in Anlage mit dem Stapelkorb kommen kann, der häufig eine geneigte Stellung in Thermoformanlagen einnimmt. Zur Übergabe an die Transporteinheit für die weitere Verarbeitung kann es erforderlich sein, dass die Hubeinheit verschwenkt wird, damit die Übergabevorrichtung und die Übergabeelemente eine im Wesentlichen horizontale Ausrichtung einnehmen.

Die vorstehend genannte Aufgabe wird auch durch eine Thermoformanlage gelöst, aufweisend mindestens eine Formstation zum Formen von Formteilen und eine Übergabestation gemäß einer der vorstehend beschriebenen Ausführungen.

Darüber hinaus wird die vorstehend beschriebene Aufgabe auch durch ein Verfahren zum Übergeben von thermogeformten Formteilen aus einem Stapelkorb an eine Transporteinheit mittels einer Übergabevorrichtung gelöst, wobei der Stapelkorb mehrere Reihen an Aufnahmefächern für Formteile aufweist, die dazu ausgebildet sind, Formteile stapelweise aufzunehmen, wobei gestapelte Formteile über eine Verschiebeeinheit reihenweise aus den Aufnahmefächern des Stapelkorbs an eine Übergabevorrichtung zur Übergabe von gestapelten Formteilen übergeben werden, wobei die Übergabevorrichtung parallel zueinander angeordnete Übergabeelemente aufweist, die jeweils eine Reihe gestapelter Formteile während einer Übergabe an eine Transporteinheit halten, wobei die Transporteinheit parallel angeordnete Aufnahmen für gestapelte Formteile aufweist, und wobei der Abstand der Übergabeelemente zueinander nach der Aufnahme von gestapelten Formteilen und vor der Übergabe an die Transporteinheit verändert wird.

Die vorstehenden Ausbildungen und Vorteilen gelten entsprechend auch für das Verfahren zum Übergeben von thermogeformten Formteilen.

Weitere Merkmale, Ausgestaltungen und Vorteile ergeben sich aus der nachfolgenden Darstellung von Ausführungsbeispielen mit Bezug auf die Figuren.

### Kurzbeschreibung der Figuren

In den Zeichnungen zeigt:
- Fig. 1: eine schematische Darstellung einer Thermoformanlage;
- Fig. 2: eine schematische Darstellung eines Formprozesses in einer Thermoformanlage;
- Fig. 3: eine schematische Darstellung einer Übergabestation;
- Fig. 4: eine weitere schematische Darstellung einer Übergabestation;
- Fig. 5: eine schematische Darstellung einer Übergabevorrichtung und eines Stapelkorbs in perspektivischer Ansicht;
- Fig. 6: eine schematische Schnittansicht durch eine Übergabevorrichtung;
- Fig. 7: eine schematische Darstellung einer Kulissenplatte mit Führungskulissen; und
- Fig. 8: eine schematische Darstellung eines Übergabeprozesses.

### Detaillierte Beschreibung von Ausführungsbeispielen

Nachfolgend werden mit Bezug auf die Figuren Ausführungsbeispiele der hierin beschriebenen technischen Lehre dargestellt. Für gleiche Komponenten, Teile und Abläufe werden in der Figurenbeschreibung gleiche Bezugszeichen verwendet. Für die hierin offenbarte technische Lehre unwesentliche oder für einen Fachmann sich erschließende Komponenten, Teile und Abläufe werden nicht explizit wiedergegeben. Im Singular angegebene Merkmale sind auch im Plural mitumfasst, sofern nicht explizit etwas anderes ausgeführt ist. Dies betrifft insbesondere Angaben wie "ein" oder "eine".

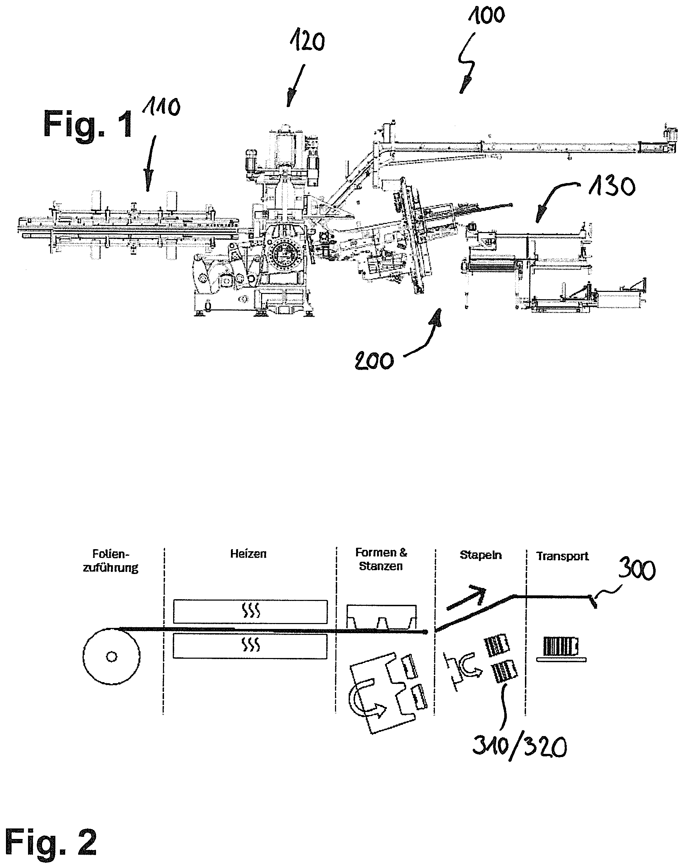

Fig. 1 zeigt eine schematische Darstellung einer Thermoformanlage 100 zum Umformen eines formbaren Materials, das in einem gezeigten Ausführungsbeispiel als endlose Materialbahn von einer Rolle zugeführt wird. Bei der Materialbahn kann es sich um eine Folie aus einem Kunststoff handeln. Es können bspw. Kunststofffolien aus PET, PP, PS, PLA, PE verarbeitet werden.

Die Thermoformanlage 100 weist eine Heizstation 110, eine Formstation 120, eine Übergabestation 200 und eine Transporteinheit 130 auf. Weiterhin kann die Thermoformanlage 100 weitere Stationen für eine Vorbehandlung und Bereitstellung einer Folie 300 sowie zum Weitertransport und/oder Weiterverarbeitung aufweisen, die in den gezeigten Ausführungsbeispielen nicht explizit beschrieben werden.

Bezugnehmend auf Fig. 2, welche eine schematische Darstellung eines Formprozesses in einer Thermoformanlage 100 zeigt, wird bei der Herstellung von Formteilen 310 in einem Thermoformprozess eine Folie 300 von einer Folienzuführung in die Thermoformanlage 100 eingebracht. Die Folie 300 wird in einer Heizstation 110 vorgewärmt und gelangt dann in die Formstation 120. In der Formstation 120 wird die Folie 300 umgeformt und gestanzt. Die aus der Folie 300 geformten und gestanzten Formteile 310 werden danach in einem Stapelkorb 210 gestapelt. Aus dem Stapelkorb werden Stapel 320 von Formteilen 310 an eine Transporteinheit 130 übergeben, welche die gestapelten Formteile 310 weiterverarbeitet. Bspw. können die Formteile 310 stapelweise in Kartons verpackt werden.

Die Formstation 120 weist ein Formwerkzeug mit einem kippbaren Formwerkzeugteil und einem stationärem Formwerkzeugteil auf. Das kippbare Formwerkzeugteil wird zum Umformen gegen ein stationäres Formwerkzeugteil gepresst. Anschließend wird das kippbare Formwerkzeugteil relativ zum stationären Formwerkzeugteil bewegt und um eine im Wesentlichen orthogonal zur Vorschubrichtung der Folie 300 verlaufende Achse gekippt, wobei in der gekippten Position die geformten Formteile 310, welche in Kavitäten des Formwerkzeugteils aufgenommen sind, über eine weitere Einrichtung, wie bspw. einen sogenannten "Pflücker", in Aufnahmefächer 212 des Stapelkorbs 210 geschoben werden.

Der Stapelkorb 210 bildet dabei das identische Produktmuster (Layout) des Formwerkzeugs ab, wobei die Aufnahmefächer 212 des Stapelkorbs 210 den gleichen Abstand und Position wie die Kavitäten des kippbaren Formwerkzeugteils aufweisen. Geformte Formteile 310 können daher bspw. über eine Pflückerplatte ohne weitere Schwierigkeiten in die Aufnahmefächer 212 geschoben werden. Bei einem Formwerkzeugwechsel zur Umstellung auf andere Formteile kann es daher notwendig sein, auch den Stapelkorb 210 zu wechseln.

Aus dem Stapelkorb 210 können die Stapel nur mit den durch das Formwerkzeug und den Abstand der Aufnahmefächer 212 vorgegebenen Abständen weitergegeben werden. Aufnahmen 136 einer nachgelagerten Transporteinheit 130 weisen jedoch einen vorgegebenen Abstand auf, der von den Abständen der Kavitäten und der Aufnahmefächer 212 abweichen kann. Um eine Anpassung zu gewährleisten, weist die Thermoformanlage 100 eine Übergabestation 200 mit einer Übergabevorrichtung 220 mit Übergabeelementen 222 auf, deren Abstand bei der Übergabe aus den Aufnahmefächern 212 an die Aufnahmen 136 der Transporteinheit 130 veränderbar ist.

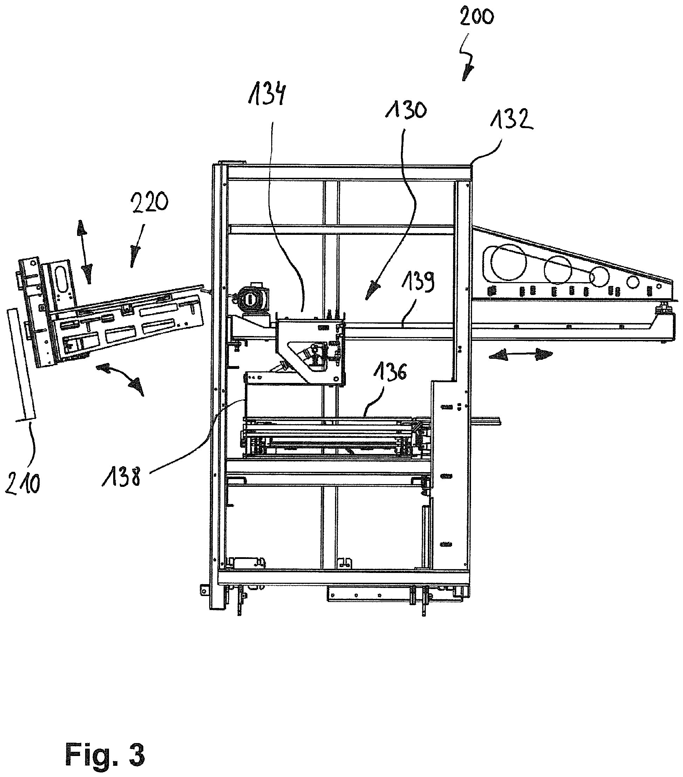

Fig. 3 zeigt eine schematische Darstellung einer Übergabestation 200, wobei der Stapelkorb 210 nur teilweise dargestellt ist. Der Stapelkorb 210 weist eine geneigte Ausrichtung auf, damit die geformten und ausgestanzten Formteile 310 aus dem unteren Formwerkzeugteil nach dem Kippen in die Aufnahmefächer 212 geschoben werden können. Die Übergabevorrichtung 220 kann in Richtung des Pfeils gekippt werden, damit die aufgenommenen Stapel 320 in waagrechter Ausrichtung weiter an die Transporteinheit 130 übergeben werden können. Aus dem Stapelkorb 210 können die Stapel 320 reihenweise über einen sogenannten Rechen auf Übergabeelemente 222 der Übergabevorrichtung 220 geschoben werden. Die Funktion und Ausbildung eines Rechens sind aus dem Stand der Technik bekannt, so dass hier nicht im Detail darauf eingegangen wird.

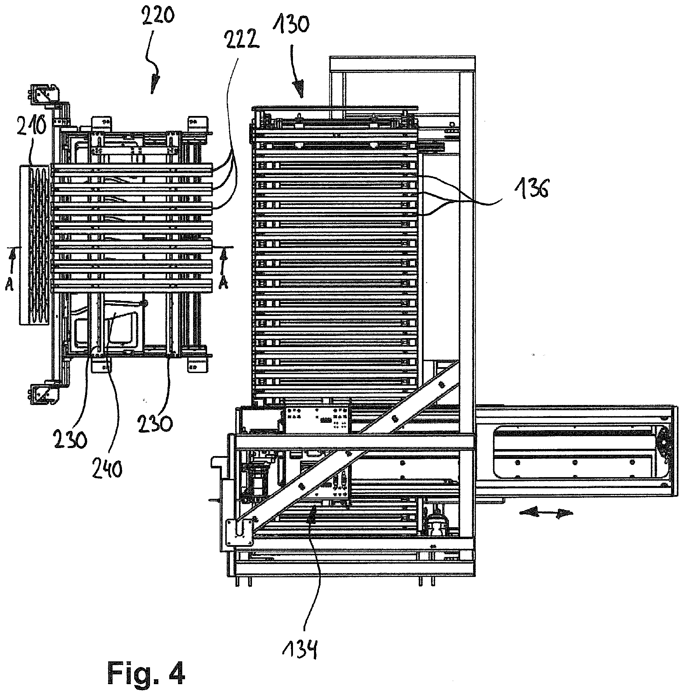

Nachdem die Stapel 320 auf die Übergabeelemente 222 geschoben worden sind, wird, wie in der gezeigten Ausführung notwendig, die Übergabevorrichtung 220 so verlagert, dass die Übergabeelemente 222 und die Aufnahmen 136 der Transporteinheit 130 zueinander ausgerichtet sind. Wie aus Fig. 4 ersichtlich, können dann die Stapel 320 aus den Aufnahmefächern 212 über den Rechen heraus- und direkt auf die Aufnahmen 136 geschoben werden.

Der Abstand der Übergabeelemente 222 in Fig. 4 entspricht bereits dem Abstand der Aufnahmen 136. Der Abstand der Aufnahmen 136 kann nicht verändert werden. Zudem ist es nicht gewünscht und nicht sinnvoll den Abstand der Aufnahmen 136 zu ändern, um eine prozesssichere Weiterverarbeitung zu gewährleisten, wobei die Stapel 320 stets in einer definierten Position weitertransportiert werden können.

In der Ausführung der Fig. 3 und 4 ist eine Ausbildung der Transporteinheit 130 mit einer Schiebeeinheit 134 dargestellt. Die Schiebeinheit 134 ist an einem Gestell 132 entlang einer teleskopierbaren Schiene 139 in Richtung des Pfeils verschiebbar. Die Schiebeeinheit 134 weist einen Schieber 138 auf, der über die Schiebeeinheit 134 verschoben werden kann, um Stapel 320 auf den Übergabeelementen 222 auf der linken Seite (Fig. 3) zu hintergreifen und dann durch Verlagerung nach rechts auf die Aufnahmen 136 zu schieben. Dazu ist der Schieber 138 zusätzlich verschwenkbar, wie in Fig. 3 durch den Pfeil angedeutet, damit beim Überfahren der Stapel 320 auf den Übergabeelementen 222 der Schieber 138 nicht an den Formteilen 310 anstößt. Erst nach dem Überfahren wird der Schieber 138 verschwenkt, um die Stapel 320 zu hintergreifen und nach rechts verschieben zu können. Die Breite des Schiebers 138 kann variieren, wobei in der gezeigten Ausführungsform gleichzeitig bspw. 4 Reihen an Stapeln 320 auf die Aufnahmen 136 geschoben werden können. Demensprechend kann es notwendig sein, mehrere Verschiebevorgänge durchzuführen, um alle Stapel 320 von der Übergabevorrichtung 220 auf die Transporteinheit 130 zu schieben.

Von den Aufnahmen 136 können über die Schiebeeinheit 134 auch Stapel 320 von den Aufnahmen 136 in den rechten Bereich von Fig. 3 geschoben werden, in dem nicht dargestellte Einrichtungen zur weiteren Verarbeitung vorgesehen sein können. In weiteren Ausführungen kann das Übergeben von Stapeln 320 von den Übergabeelementen 222 auf die Aufnahmen 136 gleichzeitig mit dem Übergeben von weiteren Stapeln 320 erfolgen, die auf den Aufnahmen 136 liegen, welche mit den zu übergebenden Stapeln 320 bestückt sind. Hierzu weist die Verschiebeeinheit 134 einen zweiten Schieber auf, der parallel beabstandet zum Schieber 138 angeordnet ist und zusammen mit diesem verschiebbar ist, so dass beim Verschieben von Stapeln 320 von den Übergabeelementen 222 gleichzeitig das Verschieben der Stapel 320 auf den Aufnahmen 136 erfolgt.

Da die Übergabe der Stapel 320 aus den Aufnahmefächern 212 immer nur reihenweise erfolgen kann und die Position der Transporteinheit 130 nicht verändert wird, ist die Übergabevorrichtung 220 zusätzlich in der Höhe verfahrbar, wie in Fig. 3 angedeutet.

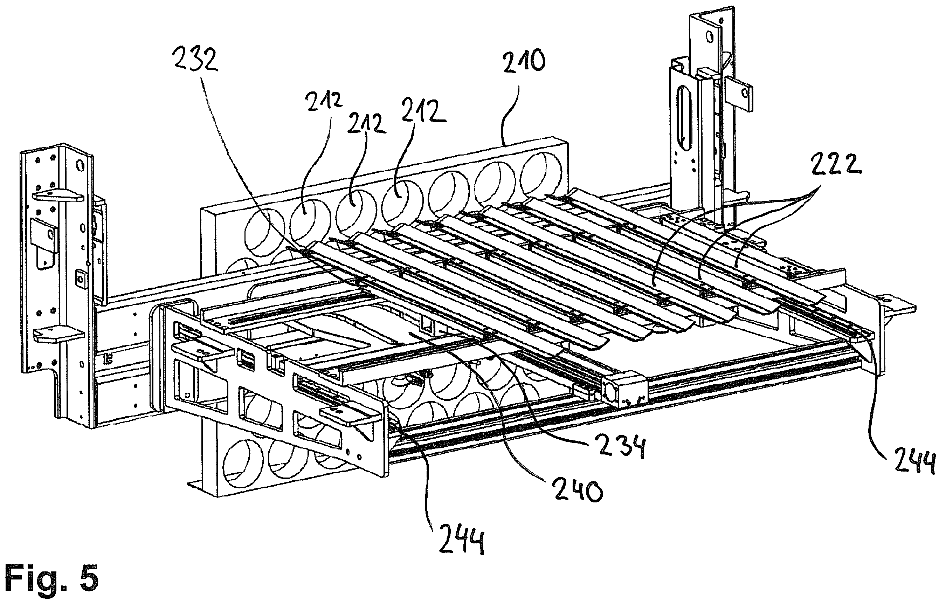

Fig. 5 zeigt eine schematische Darstellung der Übergabevorrichtung 220 und eines Teils eines Stapelkorbs 210 in perspektivischer Ansicht. In der Darstellung ist schematisch die Ausrichtung der Übergabeelemente 222 gegenüber den Aufnahmefächern 212 dargestellt, damit Stapel 320 aus den Aufnahmefächern 212 geradlinig auf die Übergabeelemente 222 über einen Rechen (nicht dargestellt) geschoben werden können, weil der Abstand der Übergabeelemente 222 im Wesentlichen dem Abstand der Aufnahmefächer 212 entspricht.

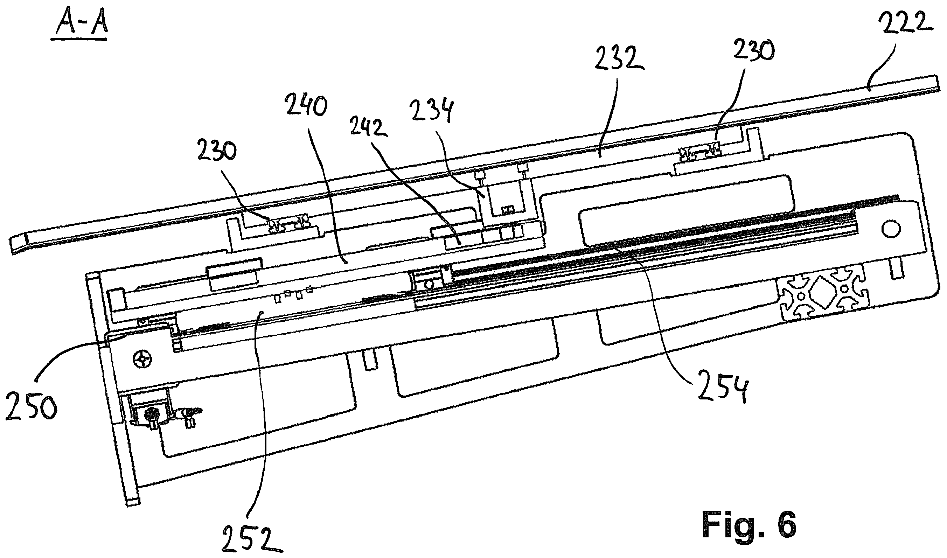

Die Übergabeelemente 222 sind schalenartig ausgebildet, so dass Stapel 320 an Formteilen 310 sicher und zentriert gehalten und übergeben werden können. Die Übergabeelemente 222 sind jeweils mit einem Träger 232 verbunden (siehe bspw. Fig. 6). Die geschnittene Darstellung in Fig. 6 zeigt den Aufbau der Übergabevorrichtung 220 durch ein Übergabeelement 222.

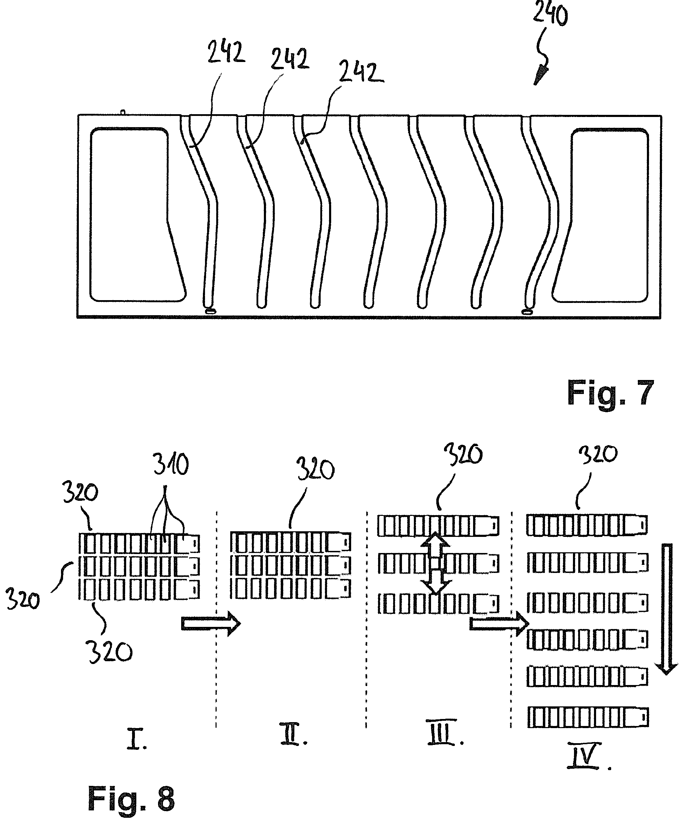

Die Träger 232 weisen Führungselemente auf, über welche die Träger 232 und damit die Übergabeelemente 222 entlang zweier parallel verlaufender Führungen 230 verschoben werden können. An der Unterseite der Träger 232 sind Bügel 234 angeordnet. Die Bügel 234 weisen jeweils ein Führungselement 236 auf, das in einer Führungskulisse 242 einer Kulissenplatte 240 aufgenommen ist. Die Kulissenplatte 240 ist entlang einer Plattenführung 244 zu beiden Seiten der Übergabevorrichtung 220 an deren Rahmen angeordnet. An der Unterseite ist die Kulissenplatte 240 mit einem Schlitten 252 verbunden. Der Schlitten 252 ist entlang einer Führungsschiene 254 linear parallel zu der Plattenführung 244 verschiebbar. Der Schlitten 252 kann über einen Linearantrieb 250 verfahren werden. Eine Verlagerung des Schlittens 252 und damit der Kulissenplatte 240 bewirkt damit eine Verlagerung der Führungselemente 236 und somit der Träger 232 und der Übergabeelemente 222 nach Maßgabe der Ausbildung der jeweiligen Führungskulissen 242. Eine mögliche Ausbildung einer Kulissenplatte 240 und der Führungskulissen 242 ist in Fig. 7 gezeigt.

Die Führungskulissen 242 sind in dem gezeigten Ausführungsbeispiel als Nuten eingebracht. Der Verlauf der Führungskulissen 242 untereinander kann, wie in Fig. 7 gezeigt, unterschiedlich sein, wobei dadurch sichergestellt wird, dass während der Verlagerung der Kulissenplatte 240 von einer Ausgangstellung zur Aufnahme von Stapeln 320 in unmittelbarer Nähe zum Stapelkorb 210 (Fig. 5) in eine Übergabestellung, in welcher die Stapel 320 an die Aufnahmen 136 der Transporteinheit 130 übergeben werden, der Abstand der Übergabeelemente 222 gleichbleibt. Damit ist gemeint, dass der Abstand zwischen den Übergabeelementen 222 während der Übergabe von einer Position in die andere Position zwar verkleinert bzw. vergrößert wird, dabei aber die Ab- bzw. Zunahme des Abstands gleichmäßig erfolgt. In den beiden Positionen (Endstellungen) weisen die Übergabeelemente 222 stets einen veränderten Abstand zueinander auf, um eine Übergabe von Stapeln zwischen Stationen bzw. Einheiten mit unterschiedlichen Abständen zu gewährleisten. In weiteren Ausführungen kann der Abstand der Übergabeelemente 222 untereinander während der Übergabe auch unterschiedlich sein. In weiteren Ausführungen kann auch der Abstand der Übergabeelemente 222 untereinander in der Übergabestellung unterschiedlich sein. Die Führungskulissen 242 sind so auszubilden, dass der benötigte Abstand für eine Übergabe an Aufnahmen 136 der Transporteinheit 130 erreicht wird.

Nach der Übergabe der Stapel 320 an die Transporteinheit 130 wird die Kulissenplatte 240 über den Linearantrieb 250 zurück in die Ausgangsstellung gefahren, wobei automatisch die Übergabeelemente 222 wieder den ursprünglichen Abstand einnehmen, welcher dem Abstand der Aufnahmefächer 212 des Stapelkorbs 210 entspricht.

Fig. 8 zeigt eine schematische Darstellung eines Übergabeprozesses, welcher das Konzept der hierin offenbarten technischen Lehre veranschaulicht. Stapel 320 an Formteilen 310 werden in einem Stapelkorb 210 in einem definierten Abstand aufgenommen (I.) und können an die Übergabevorrichtung 220 in ihrem vorab definierten Abstand übergeben werden (II.). Für die Übergabe an eine Transporteinheit 130 mit schalenartigen Aufnahmen 136, welche einen definierten Abstand aufweisen, muss daher der Abstand der Übergabeelemente 222 angepasst werden. Die Anpassung des Abstands erfolgt während der Übergabe zwischen Stapelkorb 210 und Transporteinheit 130 durch lineare Verlagerung der Kulissenplatte 240 (III.). Bei der Verlagerung der Kulissenplatte 240 werden die Übergabeelemente 222 zwangsweise entsprechend dem Verlauf der Führungskulissen 242 verlagert. Die Stapel 320 weisen dann den benötigten Abstand für die Übergabe an die Aufnahmen 136 auf können dann übergeben werden. In der Transporteinheit 130 erfolgt dann der Weitertransport für eine nachgelagerte Bearbeitung (IV.). Nach der Übergabe erfolgt in entsprechender Weise ein Zurückfahren der Übergabeelemente 222 in ihre Ausgangsstellung mit dem vorgegebenen Abstand, so dass wieder Stapel 320 aus dem Stapelkorb 210 aufgenommen werden können.

Die Ausbildung der Führungskulissen 242 ermöglicht es für eine Vielzahl an Formteildimensionen eine sichere Übergabe bereitzustellen, wobei der Abstand der Übergabeelemente 222 anpassbar ist. In weiteren Ausführungen können die Führungskulissen 242 derart ausgebildet sein, dass mehrere Abstände für verschiedene Formteile 310 abgebildet werden, wobei je nach Art und Dimension der Formteils 310 ein Verfahren der Kulissenplatte 240 bspw. für eine erste Gruppe an Formteilen 310 nur bis zu einem Teil der Kulissenplatte 140 erfolgt und für mindestens eine zweite Gruppe an Formteilen 310 ein vollständiges Verfahren der Kulissenplatte 240 erfolgt. D.h. dass der Verfahrweg bzw. die Länge des Verfahrwegs maßgeblich für die Verlagerung der Übergabeelemente 222 und damit die Einstellung des Abstands der Übergabeelemente 222 zueinander ist.

In weiteren Ausführungen können die Übergabeelemente 222 zusätzlich austauschbar sein. In noch weiteren Ausführungen kann anstelle eines Linearantriebs 250 und einer Kulissenplatte 240 eine Kulissenwalze vorgesehen sein, welche an ihrer Oberfläche Führungskulissen 242 aufweist. Durch Rotation der Kulissenwalze lassen sich ebenfalls die Übergabeelemente 222 entsprechend verändern und an den Abstand von Aufnahmen 136 einer Transporteinheit 130 einstellen. In noch weiteren Ausführungen kann auch für jedes Übergabeelement 222 ein separater Linearantrieb vorgesehen sein, der es ermöglicht, den Abstand jedes Übergabeelements 222 zu benachbarten Übergabeelementen 222 individuell einzustellen.

### Bezugszeichenliste

- 100: Thermoformanlage
- 110: Heizstation
- 120: Formstation
- 130: Transporteinheit
- 132: Gestell
- 134: Schiebeeinheit
- 136: Aufnahme
- 138: Schieber
- 139: Schiene
- 200: Übergabestation
- 210: Stapelkorb
- 212: Aufnahmefach
- 220: Übergabevorrichtung
- 222: Übergabeelement
- 230: Führung
- 232: Träger
- 234: Bügel
- 236: Führungselement
- 240: Kulissenplatte
- 242: Führungskulisse
- 244: Plattenführung
- 250: Linearantrieb
- 252: Schlitten
- 254: Führungsschiene
- 300: Folie
- 310: Formteil
- 320: Stapel

## Patentansprüche

1. Übergabevorrichtung (220) zur Übergabe von parallel angeordneten Reihen gestapelter Formteile (310), aufweisend mehrere Übergabeelemente (222), die parallel zueinander angeordnet und dazu ausgebildet sind, jeweils eine Reihe gestapelter Formteile (310) während einer Übergabe zu halten, **dadurch gekennzeichnet, dass** der Abstand der Übergabeelemente (222) während der Übergabe zwischen der Aufnahme von Reihen gestapelter Formteile (310) und der Übergabe von Reihen gestapelter Formteile (310) veränderbar ist.

2. Übergabevorrichtung (220) nach Anspruch 1, wobei der Abstand der Übergabeelemente (222) gleichmäßig veränderbar ist.

3. Übergabevorrichtung (220) nach Anspruch 1, wobei der Abstand der Übergabeelemente (222) zueinander variabel veränderbar ist.

4. Übergabevorrichtung (220) nach einem der Ansprüche 1 bis 3, aufweisend eine Kulissenführung (242), wobei die Übergabeelemente (222) jeweils ein Führungselement (236) aufweisen, das in einer korrespondierenden Führung (230) der Kulissenführung (242) aufgenommen ist, wobei die Kulissenführung (242) verlagerbar ist, um durch die Verlagerung den Abstand der Übergabeelemente (222) nach Maßgabe der Führungen (230) anzupassen.

5. Übergabevorrichtung (220) nach Anspruch 4, aufweisend eine Kulissenplatte (240), welche die Kulissenführung (242) aufweist und über mindestens einen Antrieb (250) linear verlagerbar ist, oder eine Kulissenwalze, deren Oberfläche die Kulissenführung (242) aufweist und welche über mindestens einen Antrieb (250) rotierbar gelagert ist.

6. Übergabevorrichtung (220) nach einem der Ansprüche 1 bis 5, wobei mindestens zwei Gruppen von Übergabeelementen (222) separat verlagerbar sind und/oder einen separaten Antrieb (250) aufweisen, so dass der Abstand der Übergabeelemente (222) mindestens zweiter Gruppen von Übergabeelementen (222) in der jeweiligen Gruppe und/oder der Gruppen zueinander individuell veränderbar ist.

7. Übergabevorrichtung (220) nach einem der Ansprüche 1 bis 6, wobei jedes Übergabeelement (222) einen eigenen Antrieb (250) aufweist, so dass der Abstand der Übergabeelemente (222) zueinander individuell einstellbar ist.

8. Übergabevorrichtung (220) nach einem der Ansprüche 1 bis 7, wobei die Übergabeelemente (222) als Schalen ausgebildet sind.

9. Übergabestation (200) mit einem Stapelkorb (210) zur Aufnahme thermogeformter Formteile (310) aus einem Formwerkzeug, wobei der Stapelkorb (210) mehrere Reihen an Aufnahmefächern (212) für Formteile (310) aufweist, in denen Formteile (310) stapelweise aufnehmbar sind, eine Verschiebeeinheit (134), die dazu ausgebildet ist, gestapelte Formteile (310) aus den Aufnahmefächern (212) des Stapelkorbs (210) reihenweise auszugeben, eine Übergabevorrichtung (220) zur Übergabe von gestapelten Formteilen (310) nach einem der Ansprüche 1 bis 8 mit mehreren Übergabeelementen (222), die parallel zueinander angeordnet und dazu ausgebildet sind, jeweils eine Reihe gestapelter Formteile (310) während einer Übergabe zu halten, und eine Transporteinheit (130), die parallel angeordnete Aufnahmen (136) für gestapelte Formteile (310) aufweist, wobei der Abstand der Übergabeelemente (222) zueinander veränderbar ist.

10. Übergabestation (200) nach Anspruch 9, wobei der Abstand der Aufnahmefächer (212) mindestens einer Reihe des Stapelkorbs (210) unterschiedlich groß gegenüber dem Abstand der Aufnahmen (136) der Transporteinheit (130) ist.

11. Übergabestation (200) nach Anspruch 9 oder 10, wobei die Übergabevorrichtung (220) relativ zum Stapelkorb (210) verfahrbar ist.

12. Thermoformanlage (100), aufweisend mindestens eine Formstation (120) zum Formen von Formteilen (310) und eine Übergabestation (200) nach einem der Ansprüche 9 bis 11.

13. Verfahren zum Übergeben von thermogeformten Formteilen (310) aus einem Stapelkorb (210) an eine Transporteinheit (130) mittels einer Übergabevorrichtung (220), wobei der Stapelkorb (210) mehrere Reihen an Aufnahmefächern (212) für Formteile (310) aufweist, die dazu ausgebildet sind, Formteile (310) stapelweise aufzunehmen, wobei gestapelte Formteile (310) über eine Verschiebeeinheit (134) reihenweise aus den Aufnahmefächern (212) des Stapelkorbs (210) an eine Übergabevorrichtung (220) zur Übergabe von gestapelten Formteilen (310) übergeben werden, wobei die Übergabevorrichtung (220) parallel zueinander angeordnete Übergabeelemente (222) aufweist, die jeweils eine Reihe gestapelter Formteile (310) während einer Übergabe an eine Transporteinheit (130) halten, wobei die Transporteinheit (130) parallel angeordnete Aufnahmen (136) für gestapelte Formteile (310) aufweist, und wobei der Abstand der Übergabeelemente (222) zueinander nach der Aufnahme von gestapelten Formteilen (310) und vor der Übergabe an die Transporteinheit (130) verändert wird.

## Claims

1. Transfer device (220) for transferring parallel-arranged rows of stacked moulded parts (310), comprising a plurality of transfer elements (222) which are arranged parallel to one another and are each configured to hold a row of stacked moulded parts (310) during a transfer, **characterized in that** the spacing of the transfer elements (222) is changeable, during the transfer, between the receiving of rows of stacked moulded parts (310) and the transfer of rows of stacked moulded parts (310).

2. Transfer device (220) according to claim 1, wherein the spacing of the transfer elements (222) is uniformly changeable.

3. Transfer device (220) according to claim 1, wherein the spacing of the transfer elements (222) relative to one another is variably changeable.

4. Transfer device (220) according to any one of claims 1 to 3, comprising a slotted guide (242), wherein the transfer elements (222) each comprise a guide element (236) which is received in a corresponding guide (230) of the slotted guide (242), wherein the slotted guide (242) is displaceable in order to adapt, through the displacement, the spacing of the transfer elements (222) in accordance with the guides (230).

5. Transfer device (220) according to claim 4, comprising a slotted guide plate (240) which comprises the slotted guide (242) and is linearly displaceable by way of at least one drive (250), or a slotted guide roller the surface of which comprises the slotted guide (242) and which roller is rotatably mounted by way of at least one drive (250).

6. Transfer device (220) according to any one of claims 1 to 5, wherein at least two groups of transfer elements (222) are separately displaceable and/or comprise a separate drive (250), so that the spacing of the transfer elements (222) of at least two groups of transfer elements (222) within the respective group and/or the spacing of the groups relative to one another is individually changeable.

7. Transfer device (220) according to any one of claims 1 to 6, wherein each transfer element (222) comprises its own drive (250), so that the spacing of the transfer elements (222) relative to one another is individually adjustable.

8. Transfer device (220) according to any one of claims 1 to 7, wherein the transfer elements (222) are configured as shells.

9. Transfer station (200) having a stacking basket (210) for receiving thermoformed moulded parts (310) from a forming tool, wherein the stacking basket (210) comprises a plurality of rows of receiving compartments (212) for moulded parts (310), in which moulded parts (310) can be received in stacks, a shifting unit (134) which is configured to discharge stacked moulded parts (310) row by row from the receiving compartments (212) of the stacking basket (210), a transfer device (220) for transferring stacked moulded parts (310) according to any one of claims 1 to 8, having a plurality of transfer elements (222) which are arranged parallel to one another and are each configured to hold a row of stacked moulded parts (310) during a transfer, and a transport unit (130) which comprises parallel-arranged receptacles (136) for stacked moulded parts (310), wherein the spacing of the transfer elements (222) relative to one another is changeable.

10. Transfer station (200) according to claim 9, wherein the spacing of the receiving compartments (212) of at least one row of the stacking basket (210) differs in size from the spacing of the receptacles (136) of the transport unit (130).

11. Transfer station (200) according to claim 9 or 10, wherein the transfer device (220) is movable relative to the stacking basket (210).

12. Thermoforming installation (100), comprising at least one forming station (120) for forming moulded parts (310) and a transfer station (200) according to any one of claims 9 to 11.

13. Method for transferring thermoformed moulded parts (310) from a stacking basket (210) to a transport unit (130) by means of a transfer device (220), wherein the stacking basket (210) comprises a plurality of rows of receiving compartments (212) for moulded parts (310) which are configured to receive moulded parts (310) in stacks, wherein stacked moulded parts (310) are transferred by way of a shifting unit (134) row by row from the receiving compartments (212) of the stacking basket (210) to a transfer device (220) for transferring stacked moulded parts (310), wherein the transfer device (220) comprises transfer elements (222) which are arranged parallel to one another and which each hold a row of stacked moulded parts (310) during a transfer to a transport unit (130), wherein the transport unit (130) comprises parallel-arranged receptacles (136) for stacked moulded parts (310), and wherein the spacing of the transfer elements (222) relative to one another is changed after the receiving of stacked moulded parts (310) and before the transfer to the transport unit (130).

## Revendications

1. Dispositif de transfert (220) pour le transfert de rangées, disposées parallèlement, de pièces moulées empilées (310), comprenant plusieurs éléments de transfert (222) qui sont disposés parallèlement les uns aux autres et sont conçus pour maintenir chacun une rangée de pièces moulées empilées (310) pendant un transfert, **caractérisé en ce que** l'écartement des éléments de transfert (222) est modifiable, pendant le transfert, entre la réception de rangées de pièces moulées empilées (310) et le transfert de rangées de pièces moulées empilées (310).

2. Dispositif de transfert (220) selon la revendication 1, dans lequel l'écartement des éléments de transfert (222) est modifiable de manière uniforme.

3. Dispositif de transfert (220) selon la revendication 1, dans lequel l'écartement des éléments de transfert (222) les uns par rapport aux autres est modifiable de manière variable.

4. Dispositif de transfert (220) selon l'une quelconque des revendications 1 à 3, comprenant une coulisse de guidage (242), dans lequel les éléments de transfert (222) comprennent chacun un élément de guidage (236) qui est reçu dans un guidage (230) correspondant de la coulisse de guidage (242), dans lequel la coulisse de guidage (242) est déplaçable afin d'adapter, par le déplacement, l'écartement des éléments de transfert (222) en fonction des guidages (230).

5. Dispositif de transfert (220) selon la revendication 4, comprenant une plaque à coulisse (240) qui comprend la coulisse de guidage (242) et est déplaçable linéairement par l'intermédiaire d'au moins un entraînement (250), ou un rouleau à coulisse dont la surface comprend la coulisse de guidage (242) et qui est monté à rotation par l'intermédiaire d'au moins un entraînement (250).

6. Dispositif de transfert (220) selon l'une quelconque des revendications 1 à 5, dans lequel au moins deux groupes d'éléments de transfert (222) sont déplaçables séparément et/ou comprennent un entraînement (250) séparé, de sorte que l'écartement des éléments de transfert (222) d'au moins deux groupes d'éléments de transfert (222) au sein du groupe respectif et/ou l'écartement des groupes les uns par rapport aux autres est modifiable individuellement.

7. Dispositif de transfert (220) selon l'une quelconque des revendications 1 à 6, dans lequel chaque élément de transfert (222) comprend son propre entraînement (250), de sorte que l'écartement des éléments de transfert (222) les uns par rapport aux autres est réglable individuellement.

8. Dispositif de transfert (220) selon l'une quelconque des revendications 1 à 7, dans lequel les éléments de transfert (222) sont réalisés sous forme de coques.

9. Station de transfert (200) comportant un panier d'empilage (210) pour la réception de pièces moulées thermoformées (310) provenant d'un outil de formage, dans laquelle le panier d'empilage (210) comprend plusieurs rangées de compartiments de réception (212) pour des pièces moulées (310), dans lesquels des pièces moulées (310) peuvent être reçues en piles, une unité de poussée (134) qui est conçue pour évacuer rangée par rangée des pièces moulées empilées (310) hors des compartiments de réception (212) du panier d'empilage (210), un dispositif de transfert (220) pour le transfert de pièces moulées empilées (310) selon l'une quelconque des revendications 1 à 8, comportant plusieurs éléments de transfert (222) qui sont disposés parallèlement les uns aux autres et sont conçus pour maintenir chacun une rangée de pièces moulées empilées (310) pendant un transfert, et une unité de transport (130) qui comprend des réceptacles (136) disposés parallèlement pour des pièces moulées empilées (310), dans laquelle l'écartement des éléments de transfert (222) les uns par rapport aux autres est modifiable.

10. Station de transfert (200) selon la revendication 9, dans laquelle l'écartement des compartiments de réception (212) d'au moins une rangée du panier d'empilage (210) est de dimension différente de l'écartement des réceptacles (136) de l'unité de transport (130).

11. Station de transfert (200) selon la revendication 9 ou 10, dans laquelle le dispositif de transfert (220) est mobile par rapport au panier d'empilage (210).

12. Installation de thermoformage (100), comprenant au moins une station de formage (120) pour le formage de pièces moulées (310) et une station de transfert (200) selon l'une quelconque des revendications 9 à 11.

13. Procédé de transfert de pièces moulées thermoformées (310) d'un panier d'empilage (210) à une unité de transport (130) au moyen d'un dispositif de transfert (220), dans lequel le panier d'empilage (210) comprend plusieurs rangées de compartiments de réception (212) pour des pièces moulées (310) qui sont conçus pour recevoir des pièces moulées (310) en piles, dans lequel des pièces moulées empilées (310) sont transférées, par l'intermédiaire d'une unité de poussée (134), rangée par rangée hors des compartiments de réception (212) du panier d'empilage (210) à un dispositif de transfert (220) pour le transfert de pièces moulées empilées (310), dans lequel le dispositif de transfert (220) comprend des éléments de transfert (222) disposés parallèlement les uns aux autres qui maintiennent chacun une rangée de pièces moulées empilées (310) pendant un transfert à une unité de transport (130), dans lequel l'unité de transport (130) comprend des réceptacles (136) disposés parallèlement pour des pièces moulées empilées (310), et dans lequel l'écartement des éléments de transfert (222) les uns par rapport aux autres est modifié après la réception de pièces moulées empilées (310) et avant le transfert à l'unité de transport (130).
